# EUROPEAN PATENT APPLICATION

(11) **EP 4 696 504 A1**
(43) Date of publication of application: **18.02.2026**
(21) Application number: 24811037.1
(22) Date of filing: 16.05.2024
(51) Int. Cl.: B32B 15/09, B32B 1/00, B32B 27/36, B65D 25/14

(54) **RESIN-COATED METAL PLATE FOR CONTAINER, METAL CONTAINER, AND METHOD FOR MANUFACTURING RESIN-COATED METAL PLATE FOR CONTAINER**

(30) Priority: 19.05.2023 JP 2023083438
(71) Applicant: JFE Steel Corporation, Tokyo, 100-0011 (JP)
(72) Inventor: HIRAGUCHI, Tomonari, Tokyo 100-0011 (JP); YAMANAKA,Yoichiro, Tokyo 100-0011 (JP); KITAGAWA, Junichi, Tokyo 100-0011 (JP); YAMAGUCHI, Makoto, Tokyo 100-0011 (JP)
(74) Representative: Hoffmann Eitle
(86) International application number: PCT/JP2024/018240
(87) International publication number: WO 2024/242030

(57) **Abstract**

Provided is a resin-coated metal sheet for a container that has excellent workability, coating adhesion, and feathering resistance. The resin-coated metal sheet for a container 1 includes a defined resin coating layer 3. A full width at half maximum of a peak in the vicinity of 1730 cm⁻¹, measured by irradiating a cross-section in the thickness direction of the resin coating layer 3 with linearly polarized laser light so that the polarization plane is perpendicular to the thickness direction of the resin coating layer 3, is in a defined range. A value A/B obtained by dividing a full width at half maximum A at a position 1.0 µm from the interface between the resin coating layer 3 and the metal sheet 2 by a full width at half maximum B at a position of 1/2 thickness of the resin coating layer 3, of a peak in the vicinity of 1730 cm⁻¹ measured by irradiation with a beam with the polarization plane parallel to the thickness direction of the resin coating layer 3, is 0.80 to 1.10. The resin coating layer 3 measured by X-ray diffraction has a ratio I₁₀₀/I₁₁₀ of 2.00 or more and 6.00 or less, of a diffraction peak intensity I₁₀₀ of the (100) plane to a diffraction peak intensity I₁₁₀ of the (110) plane.

## Description

### TECHNICAL FIELD

The present disclosure relates to a resin-coated metal sheet for a container that includes a polyester resin coating layer on at least one surface of a metal sheet, a metallic container using the resin-coated metal sheet for a container, and a method of producing the resin-coated metal sheet for a container.

### BACKGROUND

Conventionally, metal sheets such as tin free steel (TFS) and aluminum used as material for metallic containers have been coated for the purpose of improving corrosion resistance and weather resistance. However, this coating technique requires a long processing time due to the complicated coating and baking process, and further has the problem of discharging a large amount of solvent. Therefore, resin-coated metal sheets for containers, in which the surface of a metal sheet is covered with a thermoplastic film, have been developed and are now widely used industrially, primarily as material for beverage cans.

Resin-coated metal sheets for metallic containers are required to have good performance such as workability and coating adhesion, as well as good aesthetics and color stability. In particular, when the surface having the resin coating layer is used as the inner surface of a container such as a food can, when the food can is opened with a can opener, a phenomenon known as feathering may occur, in which the inner film does not cut along the opening of the can and remains like a feather. When this feathering occurs, it becomes a problem not only in terms of the aesthetics of the container but also in terms of hygiene.

To address this problem of feathering, Patent Literature (PTL) 1 proposes a polyester resin-coated aluminum alloy sheet in which a surface of an aluminum alloy sheet is coated with a co-extruded biaxially stretched polyester resin film having a two-layer structure consisting of an adhesive layer on a side in contact with the aluminum alloy sheet and an orientated layer on a side not in contact with the aluminum alloy sheet.

### CITATION LIST

### Patent Literature

PTL 1: JP 2004-122577 A

### SUMMARY

### (Technical Problem)

According to PTL 1, a two-layer film is disposed in the resin coating layer to improve the breakability of the film and decrease feathering. For this reason, when forming the two-layer film, it is necessary to control the composition and thickness of each layer appropriately, which raises concerns about increased costs and production burdens, and leaves room for improvement.

In view of the above problem, it would be helpful to provide a resin-coated metal sheet for a container that has excellent workability, coating adhesion, and feathering resistance, a method of producing same, and a metallic container using the metal sheet.

### (Solution to Problem)

The inventors have conducted intensive studies to solve the above problem and have made the following discoveries. When the resin coating layer has a layer having suitable crystallinity and orientation in the vicinity of a metal sheet side and a layer having an orientation perpendicular to the thickness direction in the vicinity of a surface side, the resin coating layer has excellent workability, coating adhesion, and feathering resistance. In such a case, the portion of the resin coating layer in the vicinity of the metal sheet side is made into a molten resin layer with low crystallinity in order to obtain coating adhesion to the metal sheet, and by strictly controlling the crystallinity and orientation, it is possible to obtain excellent coating adhesion and feathering resistance. Further, by providing the resin coating layer with an orientation perpendicular to the thickness direction in the vicinity of the surface side, a resin coating layer with excellent workability is obtainable. The appropriate index of the crystallinity and the orientation can be expressed by a full width at half maximum (FWHM) peak measured by laser Raman spectroscopy.

The present disclosure is made based on these discoveries, and primary features of the present disclosure are described below.
[1] A resin-coated metal sheet for a container, comprising a polyester resin coating layer on at least one surface of a metal sheet, 90 mol% or more of constituent units of the polyester resin coating layer being ethylene terephthalate units, wherein
   a full width at half maximum of a peak due to C=O stretching vibration in the vicinity of 1730 cm⁻¹, as determined by laser Raman spectroscopy in which linearly polarized laser light is incident on a thickness direction cross-section of the polyester resin coating layer so that the polarization plane is perpendicular to the thickness direction of the polyester resin coating layer, is
      (I) 14.0 cm⁻¹ or more and 18.5 cm⁻¹ or less at a position of 1.0 µm thickness from an interface between the polyester resin coating layer and the metal sheet, and
      (II) 14.0 cm⁻¹ or more and 18.0 cm⁻¹ or less at a position of 1.0 µm thickness from the surface of the polyester resin coating layer,
   a value A/B obtained by dividing a full width at half maximum A at a position of 1.0 µm thickness from the interface between the polyester resin coating layer and the metal sheet by a full width at half maximum B at a position of 1/2 thickness of the polyester resin coating layer, of a peak due to C=O stretching vibration in the vicinity of 1730 cm⁻¹, as determined by laser Raman spectroscopy in which linearly polarized laser light is incident on a thickness direction cross-section of the polyester resin coating layer so that the polarization plane is parallel to the thickness direction of the polyester resin coating layer, is 0.80 or more and 1.10 or less, and
   the polyester resin coating layer has a ratio I₁₀₀/I₁₁₀ of a diffraction peak intensity I₁₀₀ of a (100) plane to a diffraction peak intensity I₁₁₀ of a (110) plane, as determined by X-ray diffraction, of 2.00 or more and 6.00 or less.
[2] A metallic container formed from the resin-coated metal sheet for a container according to [1], wherein the polyester resin coating layer is disposed on a container inner surface side.
[3] A method of producing a resin-coated metal sheet for a container, the method comprising:
   a lamination process of thermocompression bonding a stretched polyester resin film, constituent units of which are 90 mol% or more ethylene terephthalate units, to a metal sheet using a laminate roller to obtain a resin-coated metal sheet in which a polyester resin coating layer is formed on at least one surface of the metal sheet; and
   a heat treatment process of holding the resin-coated metal sheet at 80 °C or higher and 165 °C or lower for 10 min or longer to obtain the resin-coated metal sheet for a container, wherein,
   in the lamination process, a temperature of the metal sheet at the start of the thermocompression bonding is 265 °C or higher and 279 °C or lower.

### (Advantageous Effect)

According to the present disclosure, it is possible to provide a resin-coated metal sheet for a container having excellent workability, coating adhesion, and feathering resistance, a method of producing same, and a metallic container using the metal sheet.

### BRIEF DESCRIPTION OF THE DRAWINGS

In the accompanying drawings:
FIG. 1 is a cross-section diagram illustrating configuration of a resin-coated metal sheet for a container according to an embodiment of the present disclosure; and
FIG. 2 is a diagram illustrating polarization directions of a laser in laser Raman spectroscopy.

### DETAILED DESCRIPTION

The following describes a resin-coated metal sheet for a container according to an embodiment of the present disclosure. The embodiment described below is an example embodiment of the present disclosure, and does not limit configuration to the specific example described. In the following description, unless otherwise specified, "%" indicates "mass%".

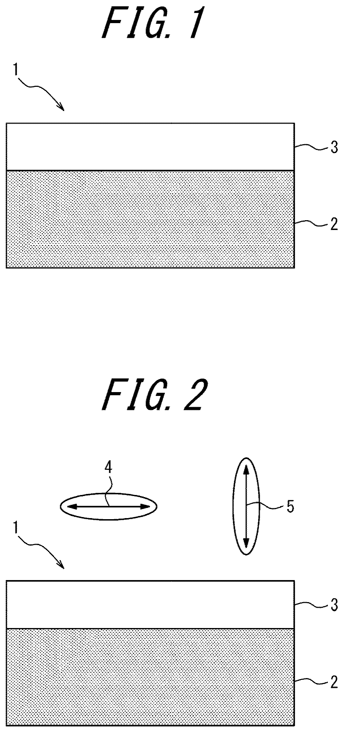

FIG. 1 illustrates a cross-section diagram of a resin-coated metal sheet for a container according to an embodiment of the present disclosure. The resin-coated metal sheet for a container 1 includes a metal sheet 2 and a polyester resin coating layer 3 (hereinafter also referred to as "resin coating layer"). Although FIG. 1 illustrates an example in which the resin-coated metal sheet for a container 1 has the resin coating layer 3 on one surface of the metal sheet 2, the resin coating layer 3 may be provided on both surfaces of the metal sheet 2.

### [Metal sheet]

As the metal sheet of the resin-coated metal sheet, a steel sheet such as tinplate or tin-free steel (TFS) may be used. The coating weight of tinplate is preferably in a range from 0.5 g/m² to 15 g/m². Tin-free steel preferably has on a surface a metallic Cr layer with a coating weight of 50 mg/m² or more and 200 g/m² or less, and a Cr oxide layer with a coating weight of 3 mg/m² or more and 30 g/m² or less, calculated as metallic Cr layer equivalent.

The type of metal sheet is not particularly limited as long as the metal sheet can be formed into a desired shape, but a steel sheet having a chemical composition and method of production described below is preferred.
(1) A steel sheet obtained by using low carbon steel having a C (carbon) content of 0.010 % or more and 0.10 % or less and subjecting the steel to recrystallization annealing by continuous annealing.
(2) A steel sheet obtained by using low carbon steel having a C content of 0.010 % or more and 0.10 % or less and subjecting the steel to recrystallization annealing and overaging treatment by continuous annealing.
(3) A steel sheet obtained by using low carbon steel having a C content of 0.010 % or more and 0.10 % or less and subjecting the steel to recrystallizing annealing by box annealing.
(4) A steel sheet obtained by using low carbon steel having a C content of 0.010 % or more and 0.10 % or less, subjecting the steel to recrystallization annealing by continuous annealing or box annealing, and then to secondary cold rolling (double reduced (DR) rolling).
(5) A steel sheet obtained by using interstitial free (IF) steel, which is made by adding elements that fix solute C, such as Nb and Ti, to an ultra low carbon steel having a C content of 0.003 % or less, and carrying out recrystallization annealing by continuous annealing.

The mechanical properties of the metal sheet are not particularly limited as long as the metal sheet can be formed into a desired shape. In order to not impair workability and to maintain sufficient can body strength, it is preferable to use a metal sheet having a yield point (YP) of 220 MPa or more and 580 MPa or less. Further, the Lankford value (r value), which is an index of plastic anisotropy, is preferably 0.8 or more. Further, the absolute value of the in-plane anisotropy Δr of the r value is preferably 0.7 or less.

The chemical composition of the metal sheet is not particularly limited. A steel sheet containing, for example, Si, Mn, P, S, Al, N, and other constituent elements may be used. The Si content is preferably 0.001 % or more. The Si content is preferably 0.1 % or less. The Mn content is preferably 0.01 % or more. The Mn content is preferably 0.6 % or less. The P content is preferably 0.002 % or more. The P content is preferably 0.05 % or less. The S content is preferably 0.002 % or more. The S content is preferably 0.05 % or less. The Al content is preferably 0.005 % or more. The Al content is preferably 0.100 % or less. The N content is preferably 0.0005 % or more. The N content is preferably 0.020 % or less. The chemical composition may further contain Ti, Nb, B, Cu, Ni, Cr, Mo, V, and the like. The total content of these component elements is preferably 1.0 % or less.

The thickness of the metal sheet is not particularly limited. For example, the thickness may be 0.01 mm or more and 0.35 mm or less.

### [Resin coating layer]

The resin coating layer is a polyester resin coating layer in which 90 mol% or more of the polyester constituent units are ethylene terephthalate units. Preferably 95 mol% or more of the polyester constituent units are ethylene terephthalate units. Further, when the proportion of ethylene terephthalate units in the structural units is less than 100 mol%, the balance may be various dicarboxylic acid units or glycol units as indicated below.

As dicarboxylic acid units, units derived from aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid can be used.

As the glycol units, units derived from aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol can be used.

The above dicarboxylic acids and glycols may be used in combinations of two or more as long as the workability is not impaired.

The resin material forming the resin coating layer is not limited by the method of production. In producing the polyester resin film, additives such as fluorescent whitening agents, antioxidants, thermal stabilizers, ultraviolet absorbers, antistatic agents, and lubricants may be added as required.

The thickness of the resin coating layer is not particularly limited. The thickness of the resin coating layer may be, for example, 0.01 mm or more and 0.10 mm or less.

The inventors have discovered that by setting the crystallinity and orientation of the resin coating layer within appropriate ranges, excellent workability, coating adhesion, and feathering resistance are obtainable.

The crystallinity and orientation of the resin coating layer can be evaluated using as an index a full width at half maximum of the peak due to C=O stretching vibration in the vicinity of 1730 cm⁻¹, as determined by laser Raman spectroscopy. It is known that the full width at half maximum of the peak due to the C=O stretching vibration in the vicinity of 1730 cm⁻¹ correlates with the density of the polyester resin (A. J. Melverger, "Laser-Raman Study of Crystallinity Changes in Poly(ethylene Terephtalate)", Journal of Polymer Science Part A2 (Polymer Physics) vol. 10, published in February 1972, pp. 317-322). Further, it is known that there is a correlation between the density of a resin and volume fraction crystallinity ("Solid Structure of Polymers II," edited by the Polymer Experimental Studies Editorial Committee of the Society of Polymer Science, Kyoritsu Shuppan Co., Ltd., 1984). Therefore, by measuring the full width at half maximum of the peak due to the C=O stretching vibration in the vicinity of 1730 cm⁻¹, the crystallinity of the polyester resin can be determined via the density of the polyester resin.

FIG. 2 illustrates a direction 4 perpendicular to the thickness direction of the resin coating layer 3 and a direction 5 parallel to the thickness direction. Conventionally, values have been used that were obtained by laser Raman spectroscopy by irradiating a thickness direction cross-section of a resin coating layer with linearly polarized laser light with the polarization plane set to the direction 5. However, the crystallinity in the vicinity of the metal sheet side and the orientation state in the vicinity of the surface side cannot be strictly evaluated based on only an average value in the thickness direction of the resin coating layer 3. Therefore, according to the present disclosure, the full width at half maximum of the peak obtained by irradiating the thickness direction cross-section of the resin coating layer 3 with linearly polarized laser light with the polarization plane set to the direction 4 (that is, a direction parallel to the surface of the metal sheet 2) is also used. This makes it possible to evaluate the crystallinity in the vicinity of the metal sheet side and in the vicinity of the surface side of the resin coating layer 3.

The full width at half maximum of a peak due to C=O stretching vibration in the vicinity of 1730 cm⁻¹, as determined by laser Raman spectroscopy in which linearly polarized laser light is incident on a thickness direction cross-section of the polyester resin coating layer with the polarization plane perpendicular to the thickness direction of the polyester resin coating layer, is 14.0 cm⁻¹ or more and 18.5 cm⁻¹ or less at a position of 1.0 µm thickness from an interface between the polyester resin coating layer and the metal sheet. When the full width at half maximum of the peak is less than 14.0 cm⁻¹, the crystallinity of the resin coating layer in the vicinity of the metal sheet interface is excessive, resulting in poor coating adhesion. On the other hand, when the full width at half maximum of the peak exceeds 18.5 cm⁻¹, the feathering resistance is poor. Further, from the viewpoint of crystallinity, the full width at half maximum of the peak is preferably 15.0 cm⁻¹ or more. Further, the full width at half maximum of the peak is preferably 16.5 cm⁻¹ or less. The full width at half maximum of the peak is more preferably 15.0 cm⁻¹ or more and 16.5 cm⁻¹ or less.

The full width at half maximum of a peak due to C=O stretching vibration in the vicinity of 1730 cm⁻¹, as determined by laser Raman spectroscopy in which linearly polarized laser light is incident on a thickness direction cross-section of the polyester resin coating layer with the polarization plane perpendicular to the thickness direction of the polyester resin coating layer, is 14.0 cm⁻¹ or more and 18.0 cm⁻¹ or less at a position of 1.0 µm thickness from the surface of the polyester resin coating layer. When the full width at half maximum of the peak is less than 14.0 cm⁻¹, crystallization proceeds excessively, resulting in embrittlement and poor workability. On the other hand, when the full width at half maximum of the peak exceeds 18.0 cm⁻¹, the feathering resistance is poor. Further, the full width at half maximum of the peak is preferably 15.0 cm⁻¹ or more. Further, the full width at half maximum of the peak is preferably 17.0 cm⁻¹ or less. The full width at half maximum of the peak is more preferably 15.0 cm⁻¹ or more and 17.0 cm⁻¹ or less.

A value A/B obtained by dividing a full width at half maximum A at a position of 1.0 µm thickness from the interface between the polyester resin coating layer and the metal sheet by a full width at half maximum B at a position of 1/2 thickness of the polyester resin coating layer, of a peak due to C=O stretching vibration in the vicinity of 1730 cm⁻¹, as determined by laser Raman spectroscopy in which linearly polarized laser light is incident on a thickness direction cross-section of the polyester resin coating layer so that the polarization plane is parallel to the thickness direction of the polyester resin coating layer, is 0.80 or more and 1.10 or less. When A/B exceeds 1.10, the adhesion between the metal sheet and the resin coating layer is impaired, and workability is also not obtained. On the other hand, when A/B is less than 0.80, the coating adhesion is excellent but feathering resistance is not obtained. A/B is preferably 1.05 or less. A/B is more preferably 1.03 or less. Further, A/B is preferably 0.85 or more. A/B is more preferably 0.90 or more. A/B is more preferably 0.85 or more and 1.05 or less. A/B is particularly preferably 0.90 or more and 1.03 or less. Further, from the viewpoint of suppressing bubble expansion, the full width at half maximum A is preferably 20.5 cm⁻¹ or less.

The full width at half maximum of the peak and A/B described above may be measured as follows. Laser Raman spectroscopy is carried out by irradiating a cross-section in the thickness direction of the resin coating layer to be measured with linearly polarized laser light so that the polarization plane is perpendicular to the cross-section in the thickness direction of the resin coating layer. This gives the full width at half maximum of the peak due to the C=O stretching vibration in the vicinity of 1730 cm⁻¹. The measurement positions are a position at 1.0 µm thickness from the interface between the resin coating layer and the metal sheet, and a position at 1.0 µm thickness from the surface of the resin coating layer. Similarly, laser Raman spectroscopy is carried out by irradiating a cross-section in the thickness direction of the produced resin-coated metal sheet for a container with linearly polarized laser light so that the polarization plane is parallel to the cross-section in the thickness direction of the resin coating layer. This gives the full width at half maximum of the peak due to the C=O stretching vibration in the vicinity of 1730 cm⁻¹. The full width at half maximum measured at a position of 1.0 µm thickness from the interface of the resin coating layer with the metal sheet is designated as A, and the full width at half maximum measured at a position of 1/2 the thickness of the resin coating layer is designated as B, and the full width at half maximum ratio A/B is determined. For the laser Raman spectroscopy, RAMAN force, produced by Nanophoton, may be used. Further, the laser wavelength is 532 nm, a 100× objective lens is used, the aperture diameter is 25 µm, and the diffraction grating is 600 gr/mm.

The resin coating layer has a ratio I₁₀₀/I₁₁₀ of a diffraction peak intensity I₁₀₀ of a (100) plane to a diffraction peak intensity I₁₁₀ of a (110) plane, as determined by X-ray diffraction, of 2.00 or more and 6.00 or less. When I₁₀₀ /I₁₁₀ is in the above range, it is possible to suppress a phenomenon called feathering, in which the film is not cut but remains like a feather along the mouth of a can when the can is opened with a can opener. The feathering phenomenon can degrade the aesthetics of the can after opening, and can also cause the film to get mixed into the food after opening, which can be a hygiene problem. In order to make the resin coating layer easier to cut when opening the can, it is necessary to increase the crystallinity of the entire resin coating layer. When I₁₀₀/I₁₁₀ is less than 2.00, the crystallinity is low, so that the resin film does not break but stretches when the can is opened, causing feathering. On the other hand, when the intensity ratio I₁₀₀/I₁₁₀ exceeds 6.00, the overall crystallinity becomes excessively high, so that the coating adhesion deteriorates and contained components may permeate the film and reach the interface between the metal sheet and the film, causing corrosion of the metal sheet. The intensity ratio I₁₀₀/I₁₁₀ is preferably 4.00 or less. The intensity ratio I₁₀₀/I₁₁₀ is more preferably 2.00 or more and 4.00 or less.

The diffraction peak intensity in each orientation can be measured as follows. X-ray diffraction is carried out on the resin-coated metal sheet for a container using a Smart Lab produced by Rigaku Corporation. The X-ray tube may be CuKα, the measurement angle range may be 2θ = 10° to 30°, and the scan speed may be 80 seconds per degree. The peak present at measurement angles 24° to 29° is regarded as the peak of the (100) plane, and the intensity I₁₀₀ is measured. Further, the peak present at measurement angles 22° to 24° is regarded as the peak of the (110) plane, and the intensity I₁₁₀ is measured. From the obtained intensities, the peak intensity ratio I₁₀₀/I₁₁₀ is determined.

### [Metallic container]

By using the resin-coated metal sheet for a container described above, it is possible to provide a metallic container that has excellent workability, coating adhesion, and feathering resistance. As one example, the metallic container includes a member formed from the resin-coated metal sheet for a container, and has the polyester resin coating layer on the container inner surface side of the member. The metallic container and the member may be produced by a conventional method.

### [Production method]

Next, a method of producing a resin-coated metal sheet for a container is described. A resin coating layer having the above-mentioned properties can be achieved by a two-stage process: (1) controlling the thermal history to thermocompress an extended polyester resin film onto a metal sheet (lamination process), and then (2) heat treatment and aging of the metal sheet (heat treatment process).

First, a non-stretched polyester resin film is produced using a polyester resin in which 90 mol% or more of the constituent units are ethylene terephthalate units. As the polyester resin constituting the polyester resin film, as described above in the explanation of the resin coating layer, a polyester resin in which 90 mol% or more of the constituent units are ethylene terephthalate units can be used. Additives and the like are also as described above in the explanation of the resin coating layer.

The method of producing the polyester resin film is not particularly limited. As one example, the polyester resin film may be produced as follows. First, a polyester resin is dried, as required, under heating and vacuum, and then charged into an extruder, where the polyester resin is heated and melted. The heated and molten polyester resin is extruded through a filter or the like. At this time, foreign matter and denatured resin can be removed by a filter. The extruded polyester resin is formed into a sheet shape using a T-die, discharged, and extruded onto a cooling body such as a casting drum. The extruded sheet is cooled and solidified to obtain a non-stretched polyester resin film.

Next, the non-stretched polyester resin film is stretched to obtain a stretched polyester resin film. As a method for obtaining a stretched polyester resin film, it is preferable to use a sequential biaxial stretching method in which the film is stretched in one of the longitudinal direction and the width direction and then stretched in the other direction, or a simultaneous biaxial stretching method in which the film is stretched simultaneously in the longitudinal direction and the width direction. The stretched polyester resin film is preferably a biaxially stretched polyester resin film.

Next, a lamination process is carried out in which the stretched polyester resin film is thermocompression bonded to the metal sheet. The stretched polyester resin film is heated to a temperature equal to or higher than a melting point, and is thermocompression bonded to the metal sheet using a laminate roller (thermocompression film lamination method). In order to control the properties of the resin coating layer, it is preferable that the resin coating layer after thermocompression bonding be in a molten state in the vicinity of the interface with the metal sheet and be in an oriented state near the surface on the opposite side.

Further, the temperature of the metal sheet at the start of thermocompression bonding is 279 °C or lower, in order to control the X-ray diffraction intensity ratio. When the temperature of the metal sheet at the start of thermocompression bonding is 279 °C or lower, the ratio I₁₀₀/I₁₁₀ of the diffraction peak intensity I₁₀₀ of the (100) plane to the diffraction peak intensity I₁₁₀ of the (110) plane in X-ray diffraction can be made 2.00 or more. On the other hand, when the temperature of the metal sheet at the start of thermocompression bonding is 265 °C or higher, the wettability between the stretched polyester resin film and the metal sheet is favorable, and the intensity ratio I₁₀₀ /I₁₁₀ can be made 6.00 or less. Therefore, the temperature of the metal sheet at the start of thermocompression bonding is 265 °C or higher. The temperature of the metal sheet at the start of thermocompression bonding is preferably 268 °C or higher. The temperature of the metal sheet at the start of thermocompression bonding is more preferably 265 °C or higher and 279 °C or lower. The temperature of the metal sheet at the start of thermocompression bonding is even more preferably 268 °C or higher and 279 °C or lower.

In order to control the vicinity of the surface side of the resin coating layer to an appropriate orientation, it is preferable to maintain the orientation formed during the production of the stretched polyester resin film without melting the stretched polyester resin film in the vicinity of the surface side. For this purpose, it is preferable that the temperature of the laminate roller that presses the stretched polyester resin film onto the metal sheet at the start of thermocompression bonding is (the melting point of the resin coating layer - 100) °C or lower. This makes it possible to suitably prevent the surface of the stretched polyester resin film from being heated to a temperature equal to or higher than the melting point during thermocompression bonding, thereby making it possible to maintain the orientation state of the stretched polyester resin film. The temperature of the laminate roller is more preferably (the melting point of the resin coating layer - 120 °C) or lower. The temperature of the laminate roller is even more preferably (the melting point of the resin coating layer - 140 °C) or lower. The temperature of the laminate roller is preferably (the melting point of the resin coating layer - 200 °C) or higher. The temperature of the laminate roller is preferably (the melting point of the resin coating layer - 200 °C) to (the melting point of the resin coating layer - *100)* °C, more preferably from (the melting point of the resin coating layer - 200 °C) to (the melting point of the resin coating layer - 120) °C, and even more preferably from (the melting point of the resin coating layer - 200 °C) to (the melting point of the resin coating layer - 140) °C.

The time during which the stretched polyester resin film is thermocompressed to the metal sheet by the laminate roller (hereinafter also referred to as the thermocompression time) is preferably short in order to maintain the oriented state. The thermocompression time is preferably 5 ms or longer. The thermocompression time is preferably 40 ms or shorter. By setting the thermocompression time to 5 ms or longer, sufficient time for the stretched polyester resin film to thermally flow is secured, improving the wetting onto the metal sheet and further improving the coating adhesion. Further, by setting the thermocompression time to 40 ms or shorter, the orientation state can be more suitably maintained. The thermocompression time is more preferably from 5 ms to 40 ms.

Next, the metal sheet after the lamination process is subjected to a heat treatment (heat treatment process). In the heat treatment process, the metal sheet side of the resin coating layer is appropriately crystallized, and the crystallinity of the resin coating layer is adjusted to fall within a range specified in the present disclosure. The heat treatment method is not particularly limited. For example, a method may be used in which the atmospheric temperature is increased to a high temperature by heating in a hot air oven and heating occurs from the surface side of the resin coating layer. Alternatively, a method of heating using an induction heater or near-infrared rays may be used.

The temperature of the heat treatment is 80 °C or higher and 165 °C or lower. This temperature range is from the glass transition temperature to the cold crystallization peak temperature of the polyester resin in which 90 mol% or more of the constituent units are ethylene terephthalate units. The heat treatment temperature is preferably 90 °C or higher. The heat treatment temperature is preferably 120 °C or lower. The heat treatment temperature is more preferably 90 °C or higher and 120 °C or lower. By setting the heat treatment temperature to 90 °C or more and 120 °C or less, it is possible to preferably obtain feathering resistance while suppressing a decrease in coating adhesion due to excessive crystallization. After the defined temperature is reached, the temperature is controlled so as to be maintained within the temperature range. The heat treatment temperature is based on a temperature of the metal sheet.

The treatment time of the heat treatment is 10 min or longer. When the treatment time is less than 10 min, crystallization of the resin coating layer in the vicinity of the metal sheet side becomes insufficient, making it difficult to obtain feathering resistance. On the other hand, the treatment time of the heat treatment is preferably 48 h or shorter. When the treatment time is 48 h or shorter, crystallization of the resin coating layer in the vicinity of the metal sheet side is favorable, and good adhesion between the metal sheet and the resin coating layer is obtainable. The heat treatment time is preferably 5 h or longer. Further, the heat treatment time is more preferably 24 h or shorter. The treatment time of the heat treatment is preferably from 1 h to 48 h, and more preferably from 5 h to 24 h.

Production conditions other than those described above may be determined according to conventional methods.

### EXAMPLES

For each example, as the metal sheet, TFS having a thickness of 0.22 mm (metallic Cr layer: 120 mg/m², Cr oxide layer: 10 mg/m² calculated as metallic Cr equivalent, temper designation: T3CA) was used. The polyester resin listed in Table 1 (proportion of ethylene terephthalate units: 100 mol%) was charged into an extruder, heated and melted, extruded through a filter, and cooled and solidified to obtain a polyester resin film. The polyester resin film was stretched in the longitudinal direction and then in the width direction to obtain a biaxially stretched polyester resin film. No. 55 was subjected to the next process without being stretched.

The metal sheet was coated with a biaxially stretched polyester resin film (non-stretched polyester resin film in the case of No. 55) by a film lamination method (film thermocompression bonding method). The metal sheet was heated at the temperature listed in Table 1, and the biaxially stretched polyester resin film (a non-stretched polyester resin film in the case of No. 55) was thermocompressed onto the metal sheet using a laminate roller. The melting point of the resin coating layer (PET) was about 260 °C. The temperature of the laminate roller was 160 °C or lower, and the thermocompression time was in a range from 5 ms to 40 ms. After 1 s had elapsed since the thermocompression bonding, the sheet was cooled with water to produce a resin-coated metal sheet in which both sides of the metal sheet were coated with a resin coating layer. Next, the resin-coated metal sheet was subjected to a heat treatment under the conditions listed in Table 1 to obtain a resin-coated metal sheet for a container.

Laser Raman spectroscopy and X-ray diffraction were carried out by the methods described above. The measurement results are listed in Table 1. In Table 1, when the direction of the polarization plane was perpendicular to the thickness direction cross-section of the resin coating layer, based on the direction of the metal sheet surface, this is noted as "horizontal polarization", and when the direction of the polarization plane was parallel to the thickness direction cross-section of the resin coating layer, this is noted as "vertical polarization".

The resin-coated metal sheets of the Examples according to the present disclosure and the Comparative Examples were evaluated for coating adhesion, workability, and feathering resistance by the methods described below. Table 1 lists the evaluation results.

### (1) Evaluation of coating adhesion

Paraffin wax was applied to the resin-coated metal sheet for a container. Then a disk having a diameter of 200 mm was punched out. The disk was deep-drawn into a cup with a drawing ratio of 2.00 using a cupping press so that the resin coating layer to be evaluated was on the can outer surface side. The resulting cup was then subjected to a two-stage redrawing process so that the drawing ratios were 2.20 and 2.50. The can flange portion was trimmed to obtain a redrawn can. The resulting can body was subjected to retort sterilization treatment at 125 °C for 90 min in a retort apparatus. After the retort sterilization treatment, the trimmed portion of the can body was observed over its entire circumference and evaluated according to the following criteria.
Evaluation "4": no peeling.
Evaluation "3": maximum peeling of 1 mm or less was observed. No problem for utility.
Evaluation "2": maximum peeling of more than 1 mm and 3 mm or less was observed. No problem for utility.
Evaluation "1": maximum peeling of more than 3 mm was observed. Problem for utility.

### (2) Evaluation of workability

Paraffin wax was applied to the resin-coated metal sheet for a container. Then a disk having a diameter of 200 mm was punched out. The disk was deep-drawn into a cup with a drawing ratio of 2.00 using a cupping press so that the resin coating layer to be evaluated was on the can outer surface side. The resulting cup was then subjected to a two-stage redrawing process so that the drawing ratios were 2.20 and 2.50. Panel working was then applied to the can bottom. The worked portion of the bottom panel of the obtained can body was observed and evaluated according to the following criteria.
Evaluation "4": no damage to the polyester resin coating layer after forming.
Evaluation "3": partial fine damage was observed in the polyester resin coating layer after forming. No problem for utility.
Evaluation "2": partial damage was observed in the polyester resin coating layer after forming. No problem for utility.
Evaluation "1": slight damage was observed all around the polyester resin coating layer after forming. Problem for utility.

### (3) Evaluation of feathering resistance

Paraffin wax was applied to the resin-coated metal sheet for a container. Then a disk having a diameter of 200 mm was punched out. The disk was deep-drawn into a cup with a drawing ratio of 2.00 using a cupping press so that the resin coating layer to be evaluated faced the can inner surface side. The resulting cup was then subjected to a two-stage redrawing process so that the drawing ratios were 2.20 and 2.50. A lid was also prepared by lid-making working so that the resin coating layer to be evaluated was on the can inner surface side, and this lid was then seamed around the redrawn can to prepare a can. The resulting can was opened using a can opener. After opening the can, the cut edge of the can was observed under an optical microscope, the length of feathering was measured, and evaluation was performed according to the following criteria.
Evaluation "4": occurrence of feathering after opening the can was 0 mm or more and 4 mm or less. No problem for utility.
Evaluation "3": occurrence of feathering after opening the can was more than 4 mm and 8 mm or less. No problem for utility.
Evaluation "2": occurrence of feathering after opening the can was more than 8 mm and 10 mm or less. No problem for utility.
Evaluation "1": occurrence of feathering after opening the can was more than 10 mm. Problem for utility.

### [Table 1]

**Table 1**

| No. | Resin | Stretching | Laminating conditions | Heat treatment conditions | | Film thickness (µm) | X-ray diffraction | Laser Raman spectroscopy C=O peak | | | Evaluation result | | | Classification |
|---|---|---|---|---|---|---|---|---|---|---|---|---|---|---|
| | | | | | | | Peak intensity ratio I₁₀₀/I₁₁₀ | Horizontal polarization | | Vertical polarization | Feathering resistance | Coating adhesion | Workability | |
| | | | Metal sheet temperature (°C) | Heat treatment temp. (°C) | Heat treatment time | | | FWHM at 1.0 µm from metal sheet interface (cm⁻¹) | FWHM at 1.0 µm from surface of resin coating layer (cm⁻¹) | FWHM ratio A/B | | | | |
| 1 | PET | Biaxial stretching | 282 | 90 | 5 h | 20 | 1.20 | 22.4 | 15.8 | 1.04 | 1 | 4 | 4 | Comparative Example |
| 2 | PET | Biaxial stretching | 280 | No | No | 20 | No crystal peak | 24.3 | 240 | 1.02 | 1 | 4 | 4 | Comparative Example |
| 3 | PET | Biaxial stretching | 265 | No | No | 20 | 6.40 | 21.4 | 13.7 | 1.01 | 1 | 4 | 1 | Comparative Example |
| 4 | PET | Biaxial stretching | 265 | 170 | 5 h | 20 | 6.40 | 16.2 | 13.6 | 0.98 | 4 | 4 | 1 | Comparative Example |
| 5 | PET | Biaxial stretching | 267 | No | No | 20 | 5.80 | 21.4 | 15.8 | 1.01 | 1 | 4 | 4 | Comparative Example |
| 6 | PET | Biaxial stretching | 267 | 90 | 60 min | 20 | 5.80 | 18.4 | 15.7 | 1.02 | 4 | 4 | 4 | Example |
| 7 | PET | Biaxial stretching | 267 | 90 | 5 h | 20 | 5.80 | 16.2 | 15.6 | 1.03 | 4 | 4 | 4 | Example |
| 8 | PET | Biaxial stretching | 269 | 90 | 5 h | 20 | 2.60 | 16.1 | 15.5 | 1.03 | 4 | 4 | 4 | Example |
| 9 | PET | Biaxial stretching | 275 | 90 | 5 h | 20 | 2.30 | 16.1 | 15.5 | 1.03 | 4 | 4 | 4 | Example |
| 10 | PET | Biaxial stretching | 276 | 90 | 5 h | 20 | 2.15 | 16.0 | 15.4 | 1.03 | 3 | 4 | 4 | Example |
| 11 | PET | Biaxial stretching | 278 | 90 | 5 h | 20 | 2.01 | 15.9 | 15.4 | 1.03 | 2 | 4 | 4 | Example |
| 12 | PET | Biaxial stretching | 267 | 90 | 1 d | 20 | 5.80 | 15.9 | 15.5 | 1.04 | 4 | 4 | 4 | Example |
| 13 | PET | Biaxial stretching | 269 | 90 | 1 d | 20 | 2.60 | 15.9 | 15.5 | 1.04 | 4 | 4 | 4 | Example |
| 14 | PET | Biaxial stretching | 275 | 90 | 1 d | 20 | 2.30 | 15.8 | 15.5 | 1.04 | 4 | 4 | 4 | Example |
| 15 | PET | Biaxial stretching | 276 | 90 | 1 d | 20 | 2.15 | 15.8 | 15.4 | 1.04 | 3 | 4 | 4 | Example |
| 16 | PET | Biaxial stretching | 278 | 90 | 1 d | 20 | 2.01 | 15.7 | 15.4 | 1.04 | 2 | 4 | 4 | Example |
| 17 | PET | Biaxial stretching | 267 | 90 | 5 days | 20 | 5.80 | 15.7 | 15.5 | 1.05 | 4 | 3 | 4 | Example |
| 18 | PET | Biaxial stretching | 267 | 100 | 10 min | 20 | 5.80 | 18.2 | 15.6 | 1.03 | 4 | 4 | 4 | Example |
| 19 | PET | Biaxial stretching | 267 | 100 | 60 min | 20 | 5.80 | 16.2 | 15.6 | 1.03 | 4 | 4 | 4 | Example |
| 20 | PET | Biaxial stretching | 269 | 100 | 60 min | 20 | 2.60 | 16.1 | 15.5 | 1.03 | 4 | 4 | 4 | Example |
| 21 | PET | Biaxial stretching | 275 | 100 | 60 min | 20 | 2.30 | 16.1 | 15.5 | 1.03 | 4 | 4 | 4 | Example |
| 22 | PET | Biaxial stretching | 276 | 100 | 60 min | 20 | 2.17 | 16.0 | 15.4 | 1.03 | 3 | 4 | 4 | Example |
| 23 | PET | Biaxial stretching | 278 | 100 | 60 min | 20 | 2.02 | 15.9 | 15.4 | 1.03 | 2 | 4 | 4 | Example |
| 24 | PET | Biaxial stretching | 267 | 100 | 5 h | 20 | 5.80 | 15.9 | 15.6 | 1.04 | 4 | 4 | 4 | Example |
| 25 | PET | Biaxial stretching | 269 | 100 | 5 h | 20 | 2.60 | 15.9 | 15.6 | 1.04 | 4 | 4 | 4 | Example |
| 26 | PET | Biaxial stretching | 275 | 100 | 5 h | 20 | 2.30 | 15.8 | 15.5 | 1.04 | 4 | 4 | 4 | Example |
| 27 | PET | Biaxial stretching | 276 | 100 | 5 h | 20 | 2.14 | 15.8 | 15.5 | 1.04 | 3 | 4 | 4 | Example |
| 28 | PET | Biaxial stretching | 278 | 100 | 5 h | 20 | 2.01 | 15.7 | 15.4 | 1.04 | 2 | 4 | 4 | Example |
| 29 | PET | Biaxial stretching | 267 | 100 | 1 day | 20 | 5.80 | 15.7 | 15.5 | 1.05 | 4 | 3 | 4 | Example |
| 30 | PET | Biaxial stretching | 267 | 100 | 5 days | 20 | 5.80 | 15.7 | 15.4 | 1.05 | 4 | 3 | 4 | Example |
| 31 | PET | Biaxial stretching | 267 | 130 | 60 min | 20 | 5.80 | 16.2 | 15.6 | 1.03 | 4 | 4 | 4 | Example |
| 32 | PET | Biaxial stretching | 269 | 130 | 5 h | 20 | 2.60 | 16.0 | 15.6 | 1.04 | 4 | 4 | 4 | Example |
| 33 | PET | Biaxial stretching | 275 | 130 | 5 h | 20 | 2.30 | 15.8 | 15.6 | 1.04 | 3 | 4 | 4 | Example |
| 34 | PET | Biaxial stretching | 278 | 130 | 5 h | 20 | 2.00 | 15.7 | 15.6 | 1.04 | 2 | 4 | 4 | Example |
| 35 | PET | Biaxial stretching | 280 | 130 | 5 h | 20 | 0.50 | 15.9 | 15.6 | 1.04 | 1 | 4 | 4 | Comparative Example |
| 36 | PET | Biaxial stretching | 276 | 130 | 5 h | 20 | 2.60 | 15.9 | 15.6 | 1.04 | 3 | 4 | 4 | Example |

| No. | Resin | Stretching | Laminating conditions | Heat treatment conditions | | Film thickness | X-ray diffraction | Laser Raman spectroscopy C=O peak | | | Evaluation result | | | Classification |
|---|---|---|---|---|---|---|---|---|---|---|---|---|---|---|
| | | | | | | | Peak intensity ratio I₁₀₀/I₁₁₀ | Horizontal polarization | | Vertical polarization | Feathering resistance | Coating adhesion | Workability | |
| | | | Metal sheet temperature (°C) | Heat treatment temp. (°C) | Heat treatment time | thickness (µm) | | FWHM at 1.0 µm from metal sheet interface (cm⁻¹) | FWHM at 1.0 µm from surface of resin coating layer (cm⁻¹) | FWHM ratio A/B | | | | |
| 37 | PET | Biaxial stretching | 267 | 130 | 5 h | 20 | 5.80 | 15.9 | 15.6 | 1.04 | 4 | 4 | 4 | Example |
| 38 | PET | Biaxial stretching | 269 | 130 | 5 h | 20 | 2.60 | 15.9 | 15.6 | 1.04 | 4 | 4 | 4 | Example |
| 39 | PET | Biaxial stretching | 275 | 130 | 5 h | 20 | 2.30 | 15.8 | 15.5 | 1.04 | 4 | 4 | 4 | Example |
| 40 | PET | Biaxial stretching | 276 | 130 | 5 h | 20 | 2.15 | 15.8 | 15.5 | 1.04 | 4 | 4 | 4 | Example |
| 41 | PET | Biaxial stretching | 278 | 130 | 5 h | 20 | 2.03 | 15.7 | 15.4 | 1.04 | 4 | 4 | 4 | Example |
| 42 | PET | Biaxial stretching | 267 | 130 | 5 h | 20 | 5.80 | 15.9 | 15.6 | 1.04 | 4 | 4 | 4 | Example |
| 43 | PET | Biaxial stretching | 270 | 130 | 1 day | 20 | 2.60 | 15.7 | 15.5 | 1.05 | 3 | 3 | 4 | Example |
| 44 | PET | Biaxial stretching | 267 | 150 | 60 min | 20 | 5.80 | 16.2 | 15.6 | 1.03 | 4 | 4 | 4 | Example |
| 45 | PET | Biaxial stretching | 269 | 150 | 5 h | 20 | 2.60 | 15.9 | 15.6 | 1.04 | 4 | 4 | 4 | Example |
| 46 | PET | Biaxial stretching | 275 | 150 | 5 h | 20 | 2.30 | 15.8 | 15.5 | 1.04 | 4 | 4 | 4 | Example |
| 47 | PET | Biaxial stretching | 276 | 150 | 5 h | 20 | 2.13 | 15.8 | 15.5 | 1.04 | 4 | 4 | 4 | Example |
| 48 | PET | Biaxial stretching | 278 | 150 | 5 h | 20 | 2.00 | 15.7 | 15.4 | 1.04 | 4 | 4 | 4 | Example |
| 49 | PET | Biaxial stretching | 280 | 150 | 5 h | 20 | 1.20 | 15.9 | 15.6 | 1.04 | 1 | 4 | 4 | Comparative Example |
| 50 | PET | Biaxial stretching | 276 | 150 | 5 h | 20 | 2.13 | 15.9 | 15.6 | 1.04 | 3 | 4 | 4 | Example |
| 51 | PET | Biaxial stretching | 270 | 150 | 5 h | 20 | 2.60 | 15.9 | 15.6 | 1.04 | 3 | 4 | 4 | Example |
| 52 | PET | Biaxial stretching | 267 | 150 | 5 h | 20 | 5.80 | 15.9 | 15.6 | 1.04 | 4 | 4 | 4 | Example |
| 53 | PET | Biaxial stretching | 267 | 170 | 60 min | 20 | 5.80 | 15.7 | 15.3 | 1.13 | 4 | 1 | 1 | Comparative Example |
| 54 | PET | Biaxial stretching | 267 | 180 | 60 min | 20 | 5.80 | 15.9 | 15.3 | 1.15 | 4 | 1 | 1 | Comparative Example |

| No. | Resin | Stretching | Laminating conditions | Heat treatment conditions | | Film thickness (µm) | X-ray diffraction | Laser Raman spectroscopy C=O peak | | | Evaluation result | | | Classification |
|---|---|---|---|---|---|---|---|---|---|---|---|---|---|---|
| | | | | | | | Peak intensity ratio I₁₀₀/I₁₁₀ | Horizontal polarization | | Vertical polarization | Feathering resistance | Coating adhesion | Workability | |
| | | | Metal sheet temperature (°C) | Heat treatment temp. (°C) | Heat treatment time | | | FWHM at 1.0 µm from metal sheet interface (cm⁻¹) | FWHM at 1.0 µm from surface of resin coating layer (cm⁻¹) | FWHM ratio A/B | | | | |
| 55 | PET | No stretching | 267 | 90 | 1 day | 20 | 0.30 | 22.2 | 22.2 | 1.02 | 1 | 4 | 1 | Comparative Example |
| 56 | PET | Biaxial stretching | 282 | 90 | 5h | 20 | 1.20 | 22.4 | 15.8 | 1.04 | 1 | 4 | 4 | Comparative Example |
| 57 | PET | Biaxial stretching | 280 | No | No | 20 | No crystal peak | 24.3 | 24.0 | 1.02 | 1 | 4 | 4 | Comparative Example |
| 58 | PET | Biaxial stretching | 280 | 150 | 5 h | 20 | 0.50 | 15.9 | 15.6 | 1.04 | 1 | 4 | 4 | Comparative Example |
| 59 | PET | Biaxial stretching | 267 | 100 | 10 min | 20 | 5.80 | 18.2 | 15.6 | 1.03 | 4 | 4 | 4 | Example |
| 60 | PET | Biaxial stretching | 267 | 100 | 60 min | 20 | 5.80 | 16.2 | 15.6 | 1.03 | 4 | 4 | 4 | Example |
| 61 | PET | Biaxial stretching | 269 | 100 | 60 min | 20 | 2.60 | 16.1 | 15.5 | 1.03 | 4 | 4 | 4 | Example |
| 62 | PET | Biaxial stretching | 275 | 100 | 60 min | 20 | 2.30 | 16.1 | 15.5 | 1.03 | 4 | 4 | 4 | Example |
| 63 | PET | Biaxial stretching | 276 | 100 | 60 min | 20 | 2.17 | 16.0 | 15.4 | 1.03 | 3 | 4 | 4 | Example |
| 64 | PET | Biaxial stretching | 278 | 100 | 60 min | 20 | 2.02 | 15.9 | 15.4 | 1.03 | 2 | 4 | 4 | Example |
| 65 | PET | Biaxial stretching | 265 | 150 | 10 days | 20 | 5.90 | 14.5 | 14.4 | 0.90 | 4 | 3 | 4 | Example |
| 66 | PET | Biaxial stretching | 265 | 150 | 20 days | 20 | 5.90 | 14.1 | 14.0 | 0.80 | 4 | 4 | 3 | Example |
| 67 | PET | Biaxial stretching | 270 | 130 | 5h | 20 | 2.50 | 18.5 | 17.5 | 1.10 | 3 | 4 | 4 | Example |
| 68 | PET | Biaxial stretching | 265 | 150 | 15 days | 20 | 5.90 | 14.3 | 14.1 | 0.85 | 4 | 3 | 4 | Example |
| 69 | PET | Biaxial stretching | 275 | 100 | 5 min | 20 | 2.00 | 18.4 | 18.1 | 1.01 | 1 | 4 | 4 | Comparative Example |
| 70 | PET | Biaxial stretching | 259 | 150 | 15 days | 20 | 8.45 | 14.1 | 13.9 | 0.81 | 4 | 2 | 1 | Comparative Example |
| 71 | PET | Biaxial stretching | 259 | 150 | 30 days | 20 | 8.45 | 13.8 | 13.6 | 0.75 | 1 | 1 | 1 | Comparative Example |

For the Examples of the resin-coated metal sheet for a container according to the present disclosure, the coating adhesion, workability, and feathering resistance were all good (evaluation "2" or better). In contrast, for the Comparative Examples, the evaluation result for at least one of the coating adhesion, workability, and feathering resistance was insufficient (evaluation "1").

No. 1, No. 2, No. 35, and No. 49 had peak intensity ratios of the resin coating layers obtained by X-ray diffraction that were outside the range of the present disclosure, and therefore poor feathering resistance. No. 3 and No. 4 had a large full width at half maximum of the C=O peak at a position 1.0 µm from the surface of the resin coating layer, and poor workability. No. 5, had a large full width at half maximum of the C=O peak at a position 1.0 µm from the interface between the resin coating layer and the metal sheet, and little crystallization, and therefore the feathering resistance was poor. No. 53 and No. 54 had a high heat treatment temperature and crystallization was sufficient at a position 1.0 µm from the interface between the resin coating layer and the metal sheet, but excessive crystallization occurred, resulting in an excessively large full width at half maximum ratio A/B, and poor coating adhesion and workability. No. 55 was a non-stretched film, and therefore had low crystallization at a position 1.0 µm from the surface of the resin coating layer, resulting in poor impact resistance and workability. Further, No. 55 to No. 58 had peak intensity ratios of the resin coating layers obtained by X-ray diffraction that were outside the range of the present disclosure, and therefore poor feathering resistance.

### INDUSTRIAL APPLICABILITY

According to the present disclosure, it is possible to provide a resin-coated metal sheet for a container having excellent workability, coating adhesion, and feathering resistance, a method of producing same, and a metallic container using the metal sheet.

### REFERENCE SIGNS LIST

- 1: resin-coated metal sheet for a container
- 2: metal sheet
- 3: resin coating layer
- 4: direction perpendicular to thickness direction of resin coating layer
- 5: direction parallel to thickness direction of resin coating layer

## Claims

1. A resin-coated metal sheet for a container, comprising a polyester resin coating layer on at least one surface of a metal sheet, 90 mol% or more of constituent units of the polyester resin coating layer being ethylene terephthalate units, wherein
a full width at half maximum of a peak due to C=O stretching vibration in the vicinity of 1730 cm⁻¹, as determined by laser Raman spectroscopy in which linearly polarized laser light is incident on a thickness direction cross-section of the polyester resin coating layer so that the polarization plane is perpendicular to the thickness direction of the polyester resin coating layer, is
(I) 14.0 cm⁻¹ or more and 18.5 cm⁻¹ or less at a position of 1.0 µm thickness from an interface between the polyester resin coating layer and the metal sheet, and
(II) 14.0 cm⁻¹ or more and 18.0 cm⁻¹ or less at a position of 1.0 µm thickness from the surface of the polyester resin coating layer,
a value A/B obtained by dividing a full width at half maximum A at a position of 1.0 µm thickness from the interface between the polyester resin coating layer and the metal sheet by a full width at half maximum B at a position of 1/2 thickness of the polyester resin coating layer, of a peak due to C=O stretching vibration in the vicinity of 1730 cm⁻¹, as determined by laser Raman spectroscopy in which linearly polarized laser light is incident on a thickness direction cross-section of the polyester resin coating layer so that the polarization plane is parallel to the thickness direction of the polyester resin coating layer, is 0.80 or more and 1.10 or less, and
the polyester resin coating layer has a ratio I₁₀₀/I₁₁₀ of a diffraction peak intensity I₁₀₀ of a (100) plane to a diffraction peak intensity I₁₁₀ of a (110) plane, as determined by X-ray diffraction, of 2.00 or more and 6.00 or less.

2. A metallic container formed from the resin-coated metal sheet for a container according to claim 1, wherein the polyester resin coating layer is disposed on a container inner surface side.

3. A method of producing a resin-coated metal sheet for a container, the method comprising:
a lamination process of thermocompression bonding a stretched polyester resin film, constituent units of which are 90 mol% or more ethylene terephthalate units, to a metal sheet using a laminate roller to obtain a resin-coated metal sheet in which a polyester resin coating layer is formed on at least one surface of the metal sheet; and
a heat treatment process of holding the resin-coated metal sheet at 80 °C or higher and 165 °C or lower for 10 min or longer to obtain the resin-coated metal sheet for a container, wherein,
in the lamination process, a temperature of the metal sheet at the start of the thermocompression bonding is 265 °C or higher and 279 °C or lower.
